# EUROPEAN PATENT APPLICATION

(11) **EP 1 843 190 A2**
(43) Date of publication of application: **10.10.2007**
(21) Application number: 07006969.5
(22) Date of filing: 03.04.2007
(51) Int. Cl.: G02B 21/14, G03B 21/20

(54) **Projector**

(30) Priority: 03.04.2006 JP 2006101796
(71) Applicant: Funai Electric Co., Ltd., Daito-shi, Osaka 574-0013 (JP)
(72) Inventor: Suzuki, Masakazu, Daito-shi Osaka, 574-0013 (JP)
(74) Representative: Grünecker, Kinkeldey, Stockmair & Schwanhäusser Anwaltssozietät

(57) **Abstract**

A lamp unit and an intake fan are connected together by a duct, and a partition plate is formed within the duct so as to extend between the two ends of the duct, thus dividing the interior of the duct into a plurality of blocks, and thereby venting between the two ends of the duct. Furthermore, the partition plate intersects the direct optical path of emitted ultraviolet light passing from the lamp along within the duct towards the intake fan. This ultraviolet light does not arrive directly at the intake fan, since the partition plate cuts off the ultraviolet light emitted from the lamp directly towards the fan, so that it is possible to prevent the intake fan from being bathed in this ultraviolet light.

## Description

### BACKGROUND OF THE INVENTION

The present invention relates to a projector having a construction in which ultraviolet radiation, which is irradiated from a lamp unit in the direction of a cooling fan, is intercepted.

Projectors are per se known in the prior art which irradiate light from a lamp upon an image display device such as a digital micro mirror device (DMD) or a liquid crystal display device, thus projecting an image displayed on this image display device upon a screen.

With this type of projector, an ultra high voltage mercury lamp is used as a light source, and it attains an extremely high temperature due to generation of heat. Furthermore, in order for the lamp to emit light at high efficiency, it is necessary to keep the temperature of the lamp constant. Thus, as described in Japanese Laid-Open Patent Publication 2005-173019, a projector has been proposed of a structure in which the interior of the lamp unit is vented by the fan, in order to cool the lamp and to keep its temperature constant.

Along with revision of the UL standard, in the case of plastic resin components for a projector which are directly bathed in UV light from the lamp which is used for a light source, it is necessary for all of them to conform a standard of ultraviolet radiation resistance.

However, no fan for air cooling a lamp unit has actually been produced in practice, in which a resin which conforms to the standard of ultraviolet radiation resistance described above is used for both the chassis and the blades.

Because of this, if a fan made from resin is to be used as the fan for cooling the lamp unit, it has been necessary to provide a construction in which the fan is not directly bathed in the light from the lamp unit.

Furthermore it is known by experience that, with a projector, if the target of the air flow which the intake fan blows for cooling the lamp is made to be the central portion of the lamp bulb, then the lamp emits light at high efficiency. However since, if a path is provided which directs an air flow at this target in a straight line, then the UV light from the lamp directly impinges upon the case of the intake fan which is made from resin, accordingly it becomes impossible to conform to the ultraviolet radiation resistance standard which is prescribed by the UL standard.

Due to this, if the UL standard is to be complied with, then it is necessary to implement some countermeasure for making the path for the air flow between the intake fan and the lamp in a shape which is not a straight line, or the like. However, if this is done, then the efficiency at which air is blown for air cooling also becomes bad, since the space occupied between the light source lamp and the intake fan becomes larger.

The object of the present invention is to provide a projector with a lamp unit cooling fan which has a structure which can air cool the lamp unit with good efficiency, without being bathed in ultraviolet radiation emitted from the lamp unit.

### SUMMARY OF THE INVENTION

A projector according to the present invention comprises a lamp unit containing a lamp which emits light for projecting an image upon a screen; a fan which air cools the interior of said lamp unit; a duct, connected between said fan and said lamp unit, which feeds air blown by said fan towards said lamp unit; and a partition plate within said duct, formed in a shape extending along the flow of air fed in towards said lamp unit.

The partition plate is arranged in a position which intersects the direct optical path of light from said lamp entering into said duct.

### BRIEF DESCRIPTION OF THE DRAWINGS

Fig. 1 is a perspective view, schematically showing the internal structure of a projector;
Fig. 2 is a planar cutaway view showing the general structure of a lamp unit of this projector, and of the surroundings thereof;
Fig. 3 is a perspective view showing the positional relationship of this lamp unit and of a duct and an intake fan;
Fig. 4A is an enlarged view of the lamp unit, duct, and intake fan; and
Fig. 4B is an enlarged view of the duct and intake fan on their own.

### DETAILED DESCRIPTION OF THE INVENTION

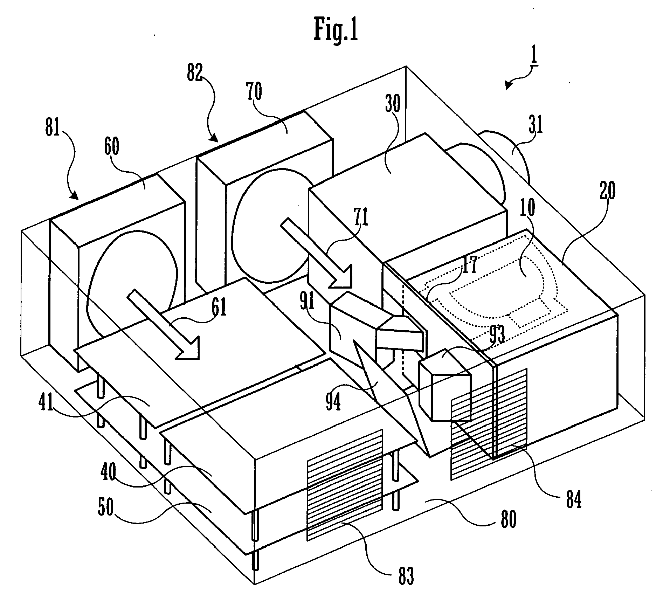

Fig. 1 is a perspective view, schematically showing the internal structure of a projector. This projector 1 comprises a lamp unit 10, an image projection unit 30, a power supply board 40, a control board 50, a main fan 60, and another main fan 70. Each of these is fitted to a chassis 80.

The lamp unit 10 emits light for image projection. Moreover, the lamp unit 10 is stored within a lamp unit storage unit 20, and can be removed from the projector 1 through the bottom surface of its main portion:

The image projection unit 30 comprises an image display device such as a DMD or the like and a color wheel, neither of which is shown in the figures. Using light from the light unit 10, this unit 30 projects an image formed by the image display device through a projection lens 31.

The power supply boards 40 and 41 supply electrical power to the lamp unit 10 and so on. And the control board 50 controls the operation of the color wheel and the image display device and so on, provided to the unit 30.

The main fans 60 and 70 are propeller fans, and are fitted in respective air intake apertures 81 and 82 which are formed in one side of the chassis 80. These main fans 60 and 70 suck in external air through the intake apertures 81 and 82, and exhaust this air through exhaust apertures 83 and 84 which are formed in the opposite side of the chassis 80. The interior of the projector 1 is air cooled in this manner.

Furthermore, this projector 1 comprises an intake fan 91 for air cooling the lamp unit 10. This intake fan 91 sucks in air which has been blown into the interior of the projector main body by the main fans 60 and 70, and thereby cools a lamp which is provided within the lamp unit 10. Air which is discharged from an exhaust aperture 93 of the lamp unit t 10 strikes against a partition plate 94, and is then discharged to the interior of the projector main body by the main fans 60 and 70.

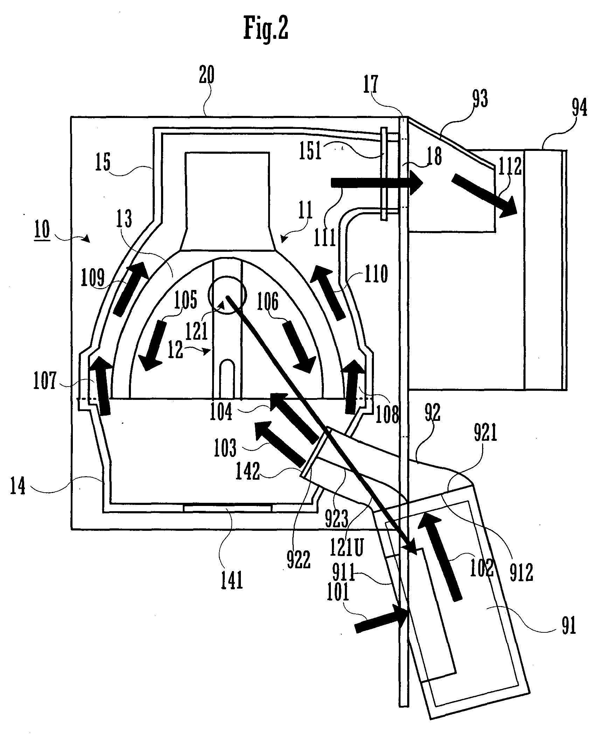

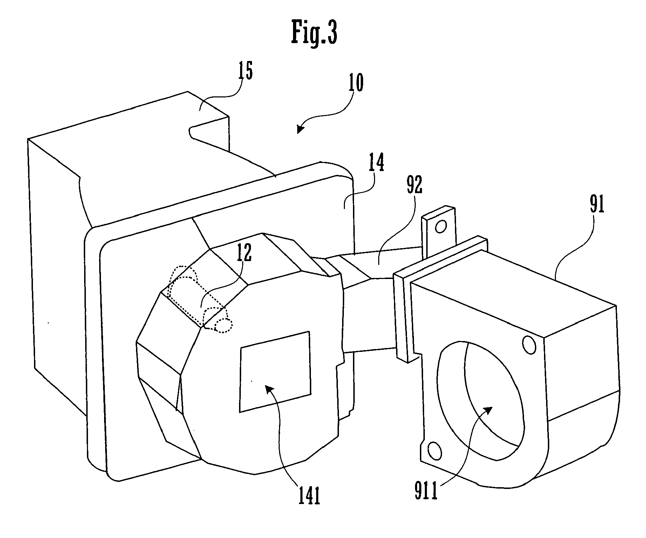

Fig. 2 is a planar cutaway view showing the general structure of the lamp unit 10, and of the surroundings thereof. And Fig. 3 is a perspective view showing the positional relationship of this lamp unit 10 and of a duct and the intake fan 91.

As shown in Fig. 2, this lamp unit 10 comprises a lamp 11 which comprises a lamp bulb 12 and a reflector 13, a front cover 14, a rear cover 15, a cable not shown in the figures which supplies electrical power to the lamp bulb 12, and the like.

As mentioned above, the lamp unit 10 houses the lamp unit storage unit 20. The front cover 14 and the rear cover 15 of the lamp unit 10 are sealed to it, so that no air leaks from their joining portions. This front cover 14 and rear cover 15 are made from aluminum.

The front cover 14 is formed with a projection aperture 141 through which light from the lamp bulb 12 is projected, and with an intake aperture 142 for entry of air for cooling the lamp 11. This front cover 14 is fitted to a front surface of the lamp 11.

The rear cover 15 has an exhaust aperture 151 for discharge of air which has cooled the lamp 11. Furthermore, the exhaust aperture 151 is connected with an exhaust aperture 18 which is formed in a wall 17 of the lamp unit storage unit 20. This rear cover 15 is fitted to a rear surface of the lamp 11.

Moreover, as shown in Figs. 2 and 3, the intake fan 91 and a duct 92 are attached to the lamp unit 10. This intake fan 91 is a sirocco fan (a sirocco type multi-bladed fan), and an exhaust aperture 912 thereof functions to join it to an intake aperture 921 of the duct 92. Furthermore, an exhaust aperture 922 of the duct 92 joins it to the intake aperture 142 of the front cover 14 of the lamp unit 10. Even further, the duct 92 and the intake aperture 142 of the front cover 14 are arranged in a configuration which is directed so as to blow air towards and against the lamp bulb 12.

With the present invention, since the structure is as described above, the intake fan 91 blows air which it has sucked in from its intake aperture 911 directly against the lamp bulb 12 of the lamp 11 from the front, and thus is able to cool the lamp bulb 12. In other words, the lamp 11 is cooled by a flow of air as shown by the black arrow signs 101 - 112 in Fig. 2. First, air which has been sucked in by the intake fan 91 through its intake aperture 911 passes along the duct 92, and is blown against the lamp bulb 12 in the lamp unit 10 from the intake aperture 142 of the front cover 14 (as shown by the black arrow signs 101 - 104). This air which is blown against the lamp bulb 12 cools the lamp bulb 12. Then the air which has been thus blown against the lamp bulb 12 passes along the vicinity of the inner surface of the reflector 13, proceeds between the rear cover 15 and the reflector 13, and then is exhausted from the exhaust aperture 151 (as shown by the black arrow signs 105 - 112).

Next, the characteristic structure of the present invention will be explained. As shown in Fig. 2, the ultraviolet light (UV light) 121U in the lamp light which is emitted from the light emission point 121 of the lamp bulb 12 passes through within the lamp bulb 12 and arrives at the intake fan 91, which is not desirable. Due to this, the intake fan 91 becomes unable to satisfy the UL regulations, since it is bathed in this ultraviolet light (UV light) included in the lamp light.

Thus, with the present invention, the duct 92 which connects between the intake fan 91 and the lamp unit 10 is formed from a plastic resin which satisfies the ultraviolet radiation resistance standard prescribed by the UL regulations. Furthermore, with the present invention, a partition plate 923 is provided within the duct 92, along the flow of the feed in air (the air flow) from the intake fan 91 to the lamp unit 10. In Fig. 2, as an example, the partition plate 923 is provided from the intake aperture 921 of the duct 92 all the way across to its exhaust aperture 922, thus dividing it into two sub-apertures 922A and 922B. Furthermore, this partition plate 923 is arranged in a position so as to intersect the optical path of the lamp light 121U which is emitted from the light emission point 121 of the lamp bulb 121 and is incident upon the exhaust aperture 921 of the duct 92. By providing the partition plate 923 in this manner, it is possible to intercept the ultraviolet light included in the lamp light emitted from the light emission point of the lamp bulb 12 directly towards the intake fan 91, without any hindrance being opposed to the flow of air within the duct 92.

Since the ultraviolet light which is emitted from the lamp bulb 12 in the direction of the intake fan 91 does not impinge directly upon this fan 91, accordingly it is possible to employ even a fan which is not made from a plastic resin which satisfies the ultraviolet radiation resistance standard prescribed by the UL regulations, without any problem occurring.

Moreover since, as described above, by providing the partition plate 923 within the interior of the duct 92 and endowing it with a function of acting as a plate which provides shielding from light, it is possible to utilize a duct of a straight tubular form which does not require any bending process for its manufacture, accordingly it is possible to feed in blown air to the lamp unit 10 at high efficiency.

Furthermore, it would also be acceptable to perform a process upon the inner surface of the duct 92 and upon the partition plate 923 in order to enhance their absorption of ultraviolet light. In other words, it would be possible to form the duct 92 and/or the partition plate 923 from a resin which functions to absorb ultraviolet radiation, or to coat the inner surface of the duct 92 and/or the partition plate 923 with a material which is endowed with an ultraviolet radiation absorption function, or to apply a paint which is endowed with an ultraviolet radiation absorption function upon the inner surface of the duct 92 and/or the inner surface of the partition plate 923. By doing this, even if the ultraviolet light which is emitted by the lamp 11 is incident upon the inside of the duct 92, nevertheless this ultraviolet light is absorbed by the inner surface of the duct 92 and by the partition plate 923. Accordingly, it is possible to prevent this ultraviolet light from being reflected so as to shine upon the intake fan 91.

Yet further, it would also be acceptable to perform a process upon the inner surface of the duct 92 and upon the partition plate 923 in order to prevent reflection therefrom. Since, by doing this, the ultraviolet light which is incident upon the inside of the duct 92 is not reflected within the duct, accordingly this ultraviolet light can be prevented from impinging upon the intake fan 91.

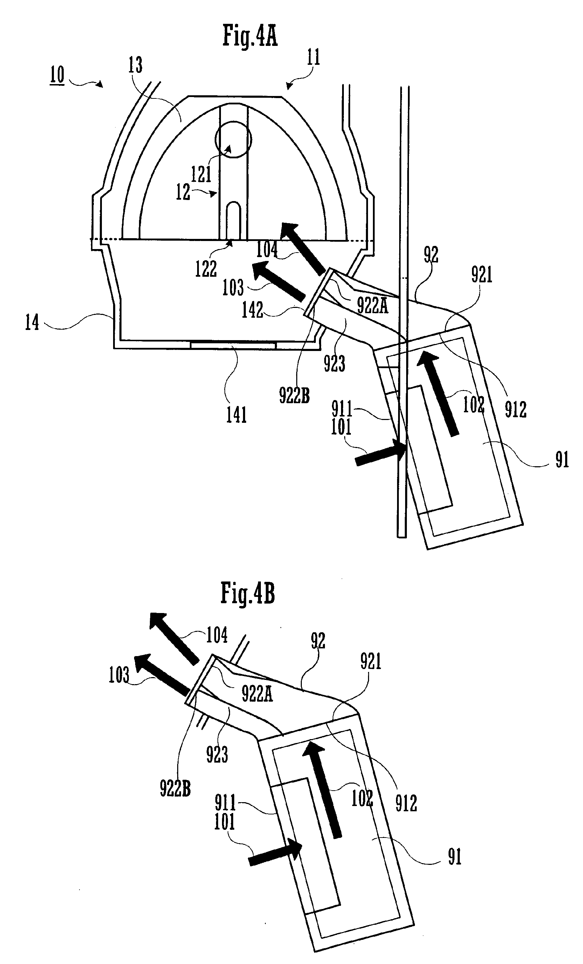

Fig. 4A is an enlarged view of the lamp unit, duct, and intake fan. Moreover, Fig. 4B is an enlarged view of the duct and intake fan on their own. In this projector 1, at the light emission point 121 of the lamp bulb 12 and at the tip end portion 122 of the lamp bulb 12, the amounts of heat generation and the temperatures at which they are to be kept constant are different. Due to this, it is necessary to vary the amount of air blown against the lamp bulb 12 according to its position. Accordingly, with the present invention, the amounts of air which is blown into the intake aperture 142 of the cover 14 from the exhaust apertures 922A and 922B of the duct 92 are adjusted by varying the position at which the partition plate 923 is provided within the duct 92, and by changing the orientation of the partition plate. For example, as shown in Fig. 4A, in the shape of the duct 92 in the vicinity of one of the exhaust apertures 922A, the direction of the tip end portion of the partition plate 923 may be processed so as to blow air from this exhaust aperture 922A towards the light emission point 121 of the lamp bulb 12. Or, in the shape of the duct 92 in the vicinity of the other exhaust aperture 922B, the configuration of the partition plate 923 may be arranged so that air is blown from this exhaust aperture 922B towards the tip end portion of the lamp bulb 12.

Moreover, as shown in Fig. 4B, the position at which the partition plate is fitted may be adjusted, so that so that the width within the duct 92 at which it is partitioned by the partition plate 923 is varied. For example, the configuration of the partition plate 923 may be arranged so that the amount of air which is blown out from the exhaust aperture 922A becomes greater than the amount of air which is blown out from the exhaust aperture 922B. By doing this, it is possible to blow more air against the light emission point 121 of the lamp bulb 12.

Since it is possible, in this manner, to blow air in a suitable amount according to the position of the lamp bulb 12, accordingly it is possible to keep the light emission point of the lamp bulb 12 at an appropriate temperature, so that it is possible to emit light with good efficiency.

It should be understood that while, in the above explanation, the case was explained in which a single partition plate 923 was provided within the duct 92, so that the duct was partitioned into two air paths, the present invention should not be limited to this particular structure; it would also be possible, for example, to provide a plurality of these partition plates, so as to divide the interior of the duct 92 into more than two paths. By doing this, it would become possible to adjust the orientation of the air flow which is blown out from the duct more finely, so that it would become possible to adjust the temperature of the lamp bulb 12 more finely.

Finally, in the above described explanation of an embodiment of the present invention, all of the features are shown by way of example, and should not be considered as being limitative of the present invention. The scope of the present invention is not to be defined by any of the features of the embodiment described above, but only by the scope of the appended Claims. Moreover, equivalents to elements in the Claims, and variations within their legitimate and proper scope, are also to be considered as being included within the range of the present invention.

## Claims

1. A projector (1), comprising:
a lamp unit (10) containing a lamp (11) which emits light for projecting an image upon a screen;
a fan (91) which air cools the interior of said lamp unit (10);
a duct (92), connected between said fan (91) and said lamp unit (10), which feeds air blown by said fan (91) towards said lamp unit (10); and
a partition plate (923) within said duct (92), formed in a shape extending along the flow of air fed in towards said lamp unit (10);
wherein said partition plate (923) is arranged in a position which intersects the direct optical path of light from said lamp (11) entering into said duct (92).

2. A projector as described in Claim 1,
wherein processing to increase absorption of ultraviolet light is performed upon inner surfaces of said duct (92) and/or said partition plate (923).

3. A projector as described in any one of Claims 1 and 2,
wherein processing to reduce reflectivity is performed upon inner surfaces of said duct (92) and/or said partition plate (923) .

4. A projector as described in any one of Claims 1 to 3,
wherein said partition plate (923) is arranged so as to feed in air in different directions.
